# EUROPEAN PATENT SPECIFICATION

(11) **EP 2 889 333 B1**
(45) Date of publication and mention of the grant of the patent: **21.02.2018**
(21) Application number: 13831603.9
(22) Date of filing: 19.08.2013
(51) Int. Cl.: C08L 101/00, C08K 9/04, C09C 1/28, C09C 3/08, C09C 3/10, C09C 3/12, C01B 33/18, C09C 1/30, C08K 5/19

(54) **MODIFIED SILICA COMPOSITION**
MODIFIZIERTE KIESELSÄUREZUSAMMENSETZUNG
COMPOSITION DE SILICE MODIFIÉE

(30) Priority: 21.08.2012 JP 2012182138
(43) Date of publication of application: 01.07.2015
(73) Proprietor: Adeka Corporation, Tokyo 116-8554 (JP)
(72) Inventor: HONMA, Go, Tokyo 116-8554 (JP); KONDO, Yoshihide, Tokyo 116-8554 (JP); SHIRAI, Hiroaki, Tokyo 116-8554 (JP)
(74) Representative: Kador & Partner
(86) International application number: PCT/JP2013/072111
(87) International publication number: WO 2014/030614

(56) References cited:
- EP-A1- 2 692 808
- EP-B1- 0 683 809
- WO-A1-2012/133287
- JP-A- H08 506 611
- JP-A- H11 209 622
- JP-A- 2006 225 513
- JP-A- 2006 225 513
- US-B2- 8 039 065
- Adeka: "ADEKA COL CC", , 12 February 2010 (2010-02-12), XP055256262, Retrieved from the Internet: URL:http://www.nardev.com/UploadSection/Pr odCat-582-1450231433.pdf [retrieved on 2016-03-08]
- Nissan Chemical: "ORGANOSILICASOL", , 1 January 2007 (2007-01-01), XP055256365, Retrieved from the Internet: URL:http://www.nissanchem-usa.com/products /organosilicasol/ [retrieved on 2016-03-08]
- Jsr: "Opstar Coating Materials", , 1 January 2010 (2010-01-01), XP055256383, Retrieved from the Internet: URL:http://www.jsr.co.jp/jsr_e/pdf/pd/lc/o pstar_5.pdf [retrieved on 2016-03-08]

## Description

### Technical Field

The present invention relates to a modified silica composition to be added to a resin composition, and more specifically, to a modified silica composition that can improve performance such as hardness of a resin film produced from a resin composition when added to the resin composition.

### Background Art

One main application of a resin is as a coating application. Specific examples thereof include an application as a paint and an application as a protective film for a material surface or a functional film. Although those resin films are applied for various purposes, an object common to many of the films is to achieve good scratch resistance.

When the scratch resistance of a resin film is poor, there arises problems such as deterioration of its aesthetic appearance due to flaws in the resin film, insufficiency of its performance as a protective film, or deterioration of its various functions. In view of the foregoing, a method involving the use of a hard resin to improve the scratch resistance, a method involving the use of a soft resin to cause the film to self-repair fine flaws, or the like have been employed. However, required performance is not obtained by those methods alone, and hence an attempt has been made to add an additive for improving scratch resistance to a resin composition to improve the scratch resistance of a coating film to be obtained (see, for example, Patent Documents 1 and 2). Fine particles made of silica and the like are generally used as such additive. When the resin composition having the fine particles added thereto is turned into a coating film, the coating film becomes hard and is difficult to scratch. However, scratch resistance as high as that required cannot be obtained, and some of the fine particles involve a problem in that their stability in a paint or the like is poor. To solve such problems, on March 28, 2011, the inventors of the present invention filed a patent application in Japan for a silica composition, which was covered with a specific cationic surfactant, or the like (Patent Documents 3 and 4). When the silica composition according to that invention is added to a solvent-type paint, the scratch resistance of a coating film to be obtained is improved and its transparency is not reduced because the composition is stably dispersed in the paint.

Although the silica compositions of Patent Document 3 or 4 can be used without any problems in an application in which the composition is applied to a hard surface such as an automotive paint or paint for a building material, it has been confirmed that the composition causes a problem in terms of transparency in an application in which a material such as a thin film to be used in a touch panel or the like is coated with a resin film.

Typically positioned on an outermost side in a material constituting a touch panel is a product obtained by coating a thin film made of a polyethylene terephthalate (PET) or the like with a resin film. The main purpose of the resin film is to prevent the surface of the touch panel from being flawed, and a product obtained by polymerizing a polyfunctional monomer such as a polyfunctional acrylate is generally used in the film in order that high scratch resistance may be obtained. Although the polyfunctional monomer has high scratch resistance because the monomer forms a high-hardness resin film, additional improvement in scratch resistance has been desired in the market.

However, it has been pointed out that when the silica composition of Patent Document 3 or the like is added to such high-hardness resin film, the effect of its scratch resistance may reduce or the transparency of the film may deteriorate. Even if the transparency deteriorates only slightly, a reduction in transparency is a fatal defect in applications such as a touch panel. Further, application of a high-hardness resin to a thin film causes a problem in that the thin film warps. If the silica particles disclosed in Patent Document 1 or 2 are used, some degree of scratch resistance is obtained but the warping of the thin film is not alleviated to a very large extent. If the warping of the thin film occurs in an application such as a touch panel, there arises a problem such as a reduction in workability or a reduction in value as a commercial product. Accordingly, in addition to an effect of improving scratch resistance, a silica composition exhibiting effects that the transparency is not reduced when the silica composition is added to a resin using a polyfunctional monomer, and that when a thin film is coated with a resin film, the thin film does not largely warp has been desired in the market. Furthermore, Patent Document 5 discloses a silica composition.

### Citation List

### Patent Document

[Patent Document 1] JP 2010-189477 A
[Patent Document 2] WO 2005/121265 A1
[Patent Document 3] JP 2012-201868 A
[Patent Document 4] JP 2012-201869 A
[Patent Document 5] JP 2006-225513 A

### Summary of Invention

### Problem to be solved by the Invention

Therefore, an object to be achieved by the present invention is to provide a modified silica composition, that when added to a resin composition, maintains the transparency of the resin while improving the scratch resistance of the resin composition, and that when the resin composition is applied to a thin film, the warping of the film is suppressed.

### Solution to Problem

In view of the foregoing, the inventors of the present invention keenly studied and have found an additive that can effectively improve the performance of a resin composition to achieve the present invention. Therefore, the present invention is a silica composition, including: compound (A) represented by the following general formula (1); and acryl- or methacryl-modified silica particles (B).

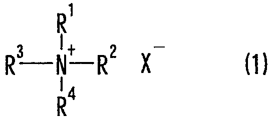

In the formula, X⁻ represents a halogen ion or a methyl sulfate ion, R¹ to R⁴ each independently represent a hydrocarbon group having 1 to 36 carbon atoms, a hydrocarbon group having 1 to 36 carbon atoms that has any one or more kinds of substituents selected from an ester group, an amide group, and a hydroxyl group, or a polyether group represented by the following general formula (2), provided that at least one of R¹ to R⁴ needs to represent a polyether group represented by the following general formula (2).

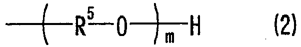

In the formula, m represents a number of from 1 to 100 and R⁵ represents an alkylene group having 2 to 4 carbon atoms, and wherein compound (A) is contained in an amount of from 2 to 10 parts by mass with respect to 10 parts by mass of raw silica particles.

### Advantageous Effects of the Invention

A modified silica composition of the present invention exhibits the effects where when added to a resin composition, the transparency of the cured resin is maintained while improving the scratch resistance of the cured resin, and where when the resin composition is applied to a thin film, the warping of the film is suppressed.

### Description of Embodiments

Compound (A) to be used in the silica composition of the present invention can be represented by the following general formula (1).

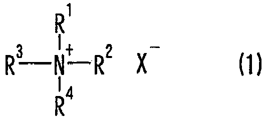

(In the formula, X⁻ represents a halogen ion or a methyl sulfate ion, R¹ to R⁴ each independently represent a hydrocarbon group having 1 to 36 carbon atoms, a hydrocarbon group having 1 to 36 carbon atoms that has any one or more kinds of substituents selected from an ester group, an amide group, and a hydroxyl group, or a polyether group represented by the following general formula (2), provided that at least one of R¹ to R⁴ needs to represent a polyether group represented by the following general formula (2).)

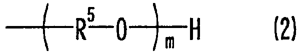

(In the formula, m represents a number of from 1 to 100 and R⁵ represents an alkylene group having 2 to 4 carbon atoms.)

R¹ to R⁴ in the general formula (1) each represent a hydrocarbon group having 1 to 36 carbon atoms, a hydrocarbon group having 1 to 36 carbon atoms that has any one or more kinds of substituents selected from an ester group, an amide group, and a hydroxyl group, or a polyether group represented by the general formula (2).

Examples of the hydrocarbon group having 1 to 36 carbon atoms include: an alkyl group such as a methyl group, an ethyl group, a propyl group, an isopropyl group, a butyl group, an isobutyl group, a tert-butyl group, a pentyl group, an isopentyl group, a neopentyl group, a tert-pentyl group, a hexyl group, an isohexyl group, a heptyl group, an isoheptyl group, an octyl group, a 2-ethylhexyl group, a nonyl group, an isononyl group, a decyl group, an isodecyl group, a undecyl group, an isoundecyl group, a dodecyl group, an isododecyl group, a tridecyl group, an isotridecyl group, a tetradecyl group, an isotetradecyl group, a hexadecyl group, an isohexadecyl group, an octadecyl group, an isooctadecyl group, an eicosyl group, a docosyl group, a tetracosyl group, a hexacosyl group, an octacosyl group, a triacontyl group, a 2-butyloctyl group, a 2-butyldecyl group, a 2-hexyloctyl group, a 2-hexyldecyl group, a 2-octyldecyl group, a 2-hexyldodecyl group, a 2-octyldodecyl group, a 2-decyltetradecyl group, a 2-dodecylhexadecyl group, a 2-tetradecyloctadecyl group, a 2-hexadecyloctadecyl group, or a monomethyl branched isostearyl group; an alkenyl group such as a vinyl group, an allyl group, a propenyl group, an isopropenyl group, abutenyl group, an isobutenyl group, a pentenyl group, an isopentenyl group, a hexenyl group, a heptenyl group, an octenyl group, a nonenyl group, a decenyl group, a undecenyl group, a dodecenyl group, a tetradecenyl group, a hexadecenyl group, or an octadecenyl group; an aryl group such as a phenyl group, a tolyl group, a xylyl group, a cumenyl group, a mesityl group, a benzyl group, a phenethyl group, a styryl group, a cinnamyl group, a benzhydryl group, a trityl group, an ethylphenyl group, a propylphenyl group, a butylphenyl group, a pentylphenyl group, a hexylphenyl group, a heptylphenyl group, an octylphenyl group, a nonylphenyl group, a decylphenyl group, an undecylphenyl group, or a dodecylphenyl group; and a cycloalkyl group such as a cyclopentyl group, a cyclohexyl group, a cycloheptyl group, a methylcyclopentyl group, a methylcyclohexyl group, a methylcycloheptyl group, a cyclopentenyl group, a cyclohexenyl group, a cycloheptenyl group, a methylcyclopentenyl group, a methylcyclohexenyl group, or a methylcycloheptenyl group.

Examples of the hydrocarbon group having 1 to 36 carbon atoms that has any one or more kinds of substituents selected from an ester group, an amide group, and a hydroxyl group include groups each obtained by: substituting one or more hydrogen atoms of any one of the hydrocarbon groups listed in the foregoing with hydroxyl groups; substituting one or more carbon-carbon bonds of any such hydrocarbon group with ester groups or amide groups in the form of introduction; or substituting any such hydrocarbon group with two or more kinds of these substituents. If a hydrocarbon group is substituted with an ester group, the number of carbon atoms increases and hence it is only necessary to substitute so that the total number of carbon atoms may be from 1 to 36.

Of those, an alkyl group having 1 to 36 carbon atoms is preferred, an alkyl group having 1 to 18 carbon atoms is more preferred, an alkyl group having 1 to 8 carbon atoms is still more preferred, an alkyl group having 1 to 4 carbon atoms is yet still more preferred, and a methyl group or an ethyl group is most preferred because the stability of the silica composition becomes good.

In addition, at least one group of R¹ to R⁴ in the general formula (1) needs to represent a polyether group represented by the following general formula (2).

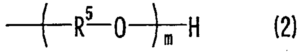

(In the formula, m represents a number of from 1 to 100 and R⁵ represents an alkylene group having 2 to 4 carbon atoms.)

R⁵ in the general formula (2) represents an alkylene group having 2 to 4 carbon atoms. Examples of such alkylene group include an ethylene group, a propylene group, a 1-methylethylene group, a 2-methylethylene group, a butylene group, a 1-ethylethylene group, a 2-ethylethylene group, a 1-methylpropylene group, a 2-methylpropylene group, and a tert-butylene group. Each of R⁵ preferably represents an alkylene group having 2 or 3 carbon atoms out of those groups, the content of an alkylene group having 3 carbon atoms being 50 mass% or more with respect to the group represented by the general formula (2) is preferable, the content being 80 mass% or more is still more preferable, and all of R⁵ being an alkylene group having 3 carbon atoms is most preferable because the stability of the silica composition becomes good and economical efficiency becomes excellent.

In the general formula (2), m represents a number of from 1 to 100, preferably a number of from 3 to 80, more preferably a number of from 5 to 40. When the value for m is small, the effect of the present invention may not be sufficiently exhibited. If the value for m is large, the ratio of the cationic group in a molecule of the compound reduces and hence its additive amount needs to be increased. If the value for m exceeds 100, the additive amount becomes so large that the physical properties of a coating film deteriorate. R⁵ represents an alkylene group having 2 to 4 carbon atoms and examples thereof can include those listed in the foregoing. The polyether group maybe produced by any one of homopolymerization by a single group, and block polymerization or random polymerization by a plurality of groups.

Although it is sufficient that one or more polyethers are present in the general formula (1), the number of groups is preferably from 1 to 3, more preferably 1 or 2. The absence of a polyether group reduces the transparency of the coating film.

In the general formula (1) X⁻ is a counter ion and X⁻represents a halogen ion or a methyl sulfate ion. If X⁻ is a methyl sulfate derivative, it can be represented by the following general formula (6).

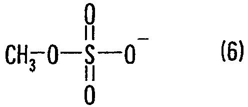

Examples of the halogen ion include a fluorine ion, a chlorine ion, a bromine ion, and an iodine ion.

Of those, the halogen ion is preferred, the chlorine ion or the bromine ion is more preferred, and the chlorine ion is still more preferred because a cationic surfactant can be produced with ease and at a low cost.

The compound (A) used in the silica composition of the present invention is in an amount of from 2 to 10 parts by mass with respect to 10 parts by mass of raw silica particles, preferably from 2 to 5 parts by mass with respect to 10 parts by mass of raw silica particles because the product stability of the silica composition improves. If the additive amount of compound (A) is excessively small, the stability of the silica composition may deteriorate, and when the additive amount is excessively large, an effect commensurate with the additive amount may not be obtained. It should be noted that the term "raw silica particles" as used herein refers to silica particles before acrylic or methacrylic modification serving as a raw material for silica particles (B).

The modified silica particles (B) to be used in the silica composition of the present invention are acryl- or methacryl-modified silica particles. Silica is generally an inorganic compound represented by the compositional formula "SiO₂" and a large number of hydroxyl groups are present on the surface of the silica. It has been known that each of those hydroxyl groups is weakly acidic and has the same reactivity as that of a typical hydroxyl group, and hence the hydroxyl groups can be modified with many modifiers.

Any silica can be utilized in the raw silica particles used for the modified silica particles (B) as long as the silica is particulate. In addition, the silica may contain any other metal oxide such as aluminum oxide or titanium oxide as long as the content of the other metal oxide is small. When the silica contains such metal oxide, the content of the metal oxide is preferably 50 mol% or less, more preferably 20 mol% or less, still more preferably 5 mol% or less of the silica.

Further, although there are several kinds of silica such as dry silica, wet silica, and aqueous colloidal silica, aqueous colloidal silica is preferred as the raw silica particles because its particles are small and have a uniform particle diameter.

Although the aqueous colloidal silica is typically made into a product as an aqueous solution having a solid content of from 10 to 50 mass%, and is produced as an aqueous solution by using a silicate, a tetraalkoxysilane, or the like as a raw material, the kind of rawmaterial is not particularly designated. The particle diameter of the colloidal silica, which is also not particularly designated, is preferably from 1 to 300 nm, more preferably from 3 to 200 nm, still more preferably from 5 to 100 nm. In addition, the greater the product stability of the colloidal, the more preferable it is. Specifically, as long as the colloidal silica is prevented from gelling under an atmosphere having a temperature of 40°C for 1 month or more, the colloidal silica can be preferably used as colloidal silica having good product stability. In addition, colloidal silicas dispersed in a solvent and the like have also been known and these silicas are each typically modified colloidal silica obtained by subjecting colloidal silica to, for example, alkyl modification with a modifier. Although such modified colloidal silica basically cannot be used in the present invention because the surface of the silica has substantially no hydroxyl groups for introducing an acryl group and the like, the silica can be used when its modification ratio is low and a hydroxyl group as a reactive group is present at a certain ratio.

Although the modified silica particles (B) only need to be silica particles each having an acryl group or a methacryl group, and the production method therefor is not limited, silica particles as a raw material (hereinafter referred to as "raw silica particles") are preferably modified with a modifier. The kind of modifier is not limited as long as an acryl group or a methacryl group can be introduced into the raw silica particles.

Although the particle diameters of the raw silica particles are not limited, their average particle diameter is preferably from 1 to 500 nm, more preferably from 5 to 300 nm, still more preferably from 10 to 200 nm because the particles are uniformly dispersed in a resin to which the silica composition is added and efficiently exhibit an effect such as scratch resistance. In addition, although raw silica particles sometimes contain compounds besides the silica such as aluminum oxide or titanium oxide as impurities, such impurities are allowable at a content of 10 mass% or less with respect to the entirety of the raw silica particles, and a content of 5 mass% or less is preferable, more preferably 1 mass% or less.

The modifier needs to have a reactive group that reacts with a hydroxyl group of the silica particles, and examples of such reactive group include groups such as an isocyanate group, an alkoxysilyl group, a carboxyl group, an epoxy group, and a cationic group. It should be noted that a cationic group does not directly react with a hydroxyl group but modifies the raw silica particles in the form of being adsorbed to negatively charged fine particles. Of those modifiers, modifiers having an isocyanate group, an alkoxysilyl group, and a cationic group are preferred, a compound having a molecular weight of from 100 to 500 is more preferred, and a compound having a molecular weight of from 120 to 350 is still more preferred because any such modifier has high versatility and the reaction is easily controlled. Of those, modifiers represented by the following general formulae (3) to (5) are more preferred, and modifiers represented by the general formulae (4) and (5) are still more preferred because the modifiers represented by the general formulae (4) and (5) each have good scratch resistance.

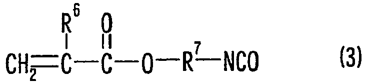

(In the formula, R⁶ represents a hydrogen atom or a methyl group and R⁷ represents an alkylene group having 1 to 6 carbon atoms.)

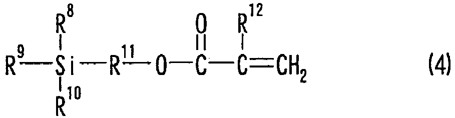

(In the formula, R⁸ to R¹⁰ each represent anyone of groups selected from the group consisting of an alkyl group having 1 to 4 carbon atoms, an oxyalkyl group having 1 to 4 carbon atoms, and a chlorine atom, R¹¹ represents an alkylene group having 1 to 6 carbon atoms, and R¹² represents a hydrogen atom or a methyl group, provided that any one or more of R⁸ to R¹⁰ each need to represent an oxyalkyl group having 1 to 4 carbon atoms or a chlorine atom.)

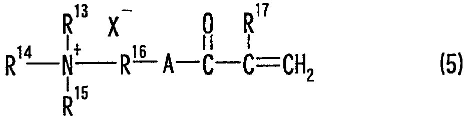

(In the formula, R¹³ to R¹⁵ each represent an alkyl group having 1 to 4 carbon atoms, R¹⁶ represents an alkylene group having 1 to 6 carbon atoms, R¹⁷ represents a hydrogen atom or a methyl group, A represents an oxygen atom or -NH-, and X represents a halogen atom or a methyl sulfate derivative.)

R⁶ in the general formula (3) represents a hydrogen atom or a methyl group. When R⁶ represents a hydrogen atom, an acryl group is introduced into the silica particles, and when R⁶ represents a methyl group, a methacryl group is introduced into the silica particles.

R⁷ in the general formula (3) represents an alkylene group having 1 to 6 carbon atoms. Examples of such alkylene group include a methylene group, an ethylene group, a propylene group, a butylene group, a pentylene group, a hexylene group, a methylethylene group, a methylpropylene group, a methylbutylene group, a methylpentylene group, a dimethylpropylene group, a dimethylbutylene group, an ethylpropylene group, and an ethylbutylene group. Of those groups, from the viewpoint of versatility and easy availability, an ethylene group is preferred.

The compound represented by the general formula (3) contains an isocyanate group, and the group reacts with a hydroxyl group of the silica particles to form a urethane bond. As a result, an acryl group or a methacryl group is introduced into the silica particles.

In addition, the molecular weight of the compound represented by the general formula (3) is preferably from 100 to 300, more preferably from 120 to 200. In this case, when the molecular weight of the modifier is excessively large (the molecular weight exceeds 300), the number of molecules of the modifier that react with the silica particles reduces and hence there are cases where the effect of the present invention may not be obtained.

R¹² in the general formula (4) represents a hydrogen atom or a methyl group. When R¹² represents a hydrogen atom, an acryl group is introduced into the silica particles, and when R¹² represents a methyl group, a methacryl group is introduced into the silica particles.

R¹¹ in the general formula (4) represents an alkylene group having 1 to 6 carbon atoms. Examples of such alkylene group include a methylene group, an ethylene group, a propylene group, a butylene group, a pentylene group, a hexylene group, a methylethylene group, a methylpropylene group, a methylbutylene group, a methylpentylene group, a dimethylpropylene group, a dimethylbutylene group, an ethylpropylene group, and an ethylbutylene group. Of these groups, from the viewpoint of versatility and easy availability, a propylene group is preferred.

R⁸ to R¹⁰ in the general formula (4) each represent any one of an alkyl group having 1 to 4 carbon atoms, an oxyalkyl group having 1 to 4 carbon atoms, and a chlorine atom. Examples of the alkyl group having 1 to 4 carbon atoms include a methyl group, an ethyl group, a propyl group, an isopropyl group, a butyl group, and a tert-butyl group. Of those, a methyl group or an ethyl group is preferred and a methyl group is more preferred because steric hindrance at the time of the reaction with the silica particles reduces. Examples of the oxyalkyl group having 1 to 4 carbon atoms include a methoxy group, an ethoxy group, a propoxy group, and a butoxy group. Of those, a methoxy group and an ethoxy group are preferred, and a methoxy group is more preferred because any such group has good reactivity with the silica particles.

Although R⁸ to R¹⁰ in the general formula (4) may each represent a chlorine atom as well as the foregoing groups, any one or more of the groups each need to be an oxyalkyl group having 1 to 4 carbon atoms or a chlorine atom, and two or more of the groups are each more preferably an oxyalkyl group having 1 to 4 carbon atoms or a chlorine atom. This is because these groups react as reactive groups with hydroxyl groups present on the silica particles to provide the acryl- or methacryl-modified silica particles. In addition, an oxyalkyl group is preferred to a chlorine atom because a chlorine atom produces hydrochloric acid as a byproduct at the time of the reaction and hydrochloric acid needs to be removed in subsequent treatment.

In addition, the molecular weight of the compound represented by the general formula (4) is preferably from 150 to 500, more preferably from 170 to 350. In this case, when the molecular weight of the modifier is excessively large (the molecular weight exceeds 500), the number of molecules of the modifier that react with the silica particles reduces and hence there are cases where the effect of the present invention may not be obtained.

R¹⁷ in the general formula (5) represents a hydrogen atom or a methyl group. When R¹⁷ represents a hydrogen atom, an acryl group is introduced into the silica particles, and when R¹⁷ represents a methyl group, a methacryl group is introduced into the silica particles.

R¹⁶ in the general formula (5) represents an alkylene group having 1 to 6 carbon atoms. Examples of such alkylene group include a methylene group, an ethylene group, a propylene group, a butylene group, a pentylene group, a hexylene group, a methylethylene group, a methylpropylene group, a methylbutylene group, a methylpentylene group, a dimethylpropylene group, a dimethylbutylene group, an ethylpropylene group, and an ethylbutylene group. Of those groups, from the viewpoint of versatility and easy availability, an ethylene group is preferred.

A in the general formula (5) represents an oxygen atom or-NH-. When A represents an oxygen atom, a state in which a cationic group and an aryl group or a methacryl group are bonded to each other through an ester bond is established, and when A represents -NH-, a state in which the cationic group and the acryl group or the methacryl group are bonded to each other through an amide bond is established.

R¹³ to R¹⁵ in the general formula (5) each represent an alkyl group having 1 to 4 carbon atoms. Examples of the group include a methyl group, an ethyl group, a propyl group, an isopropyl group, a butyl group, and a tert-butyl group.

In the general formula (5), X⁻ is a counter ion and X represents a halogen atom or a methyl sulfate derivative. Examples of the halogen atom include a fluorine atom, a chlorine atom, a bromine atom, and an iodine atom. X⁻ in the case of a methyl sulfate derivative can be represented by the general formula (6) shown in the foregoing. Of those, the halogen atom is preferred, the chlorine atom or the bromine atom is more preferred, and the chlorine atom is still more preferred because a cationic surfactant can be produced with ease and at a low cost.

In addition, the molecular weight of the compound represented by the general formula (5) is preferably from 150 to 500, more preferably from 170 to 350. In this case, when the molecular weight of the modifier is excessively large (the molecular weight exceeds 500), the number of molecules of the modifier that react with the silica particles reduces and hence there are cases where the effect of the present invention may not be obtained.

Although the amount of the modifier with respect to the raw silica particles is not particularly limited, the amount is preferably from 0.1 to 15 parts by mass, more preferably from 0.5 to 10 parts by mass, still more preferably from 1 to 8 parts by mass with respect to 10 parts by mass of the raw silica particles. If the amount of the modifier is less than 0.1 part by mass, the modification ratio of the modified silica particles (B) to be obtained reduces, and hence even if the silica composition is added to a resin, scratch resistance may not be obtained in some cases. If the amount exceeds 15 parts by mass, an effect commensurate with the additive amount may not be obtained in some cases, an effect of suppressing warping after the application of the resin to a thin film may not be obtained in some cases, or insoluble matter may be produced in some cases. It should be noted that the raw silica particles may of course be modified with one kind of modifier, or the raw silica particles may be modified with two or more kinds of modifiers.

The silica composition of the present invention is preferably diluted with a solvent to be brought into a solution state because the composition can be easily produced and handled, and is uniformly dispersed with ease in a resin to which the composition is added. Although the kind of solvent is not limited as long as the solvent is not a solvent having a group that reacts with water or the modifier, the solvent is preferably any one or more kinds of solvents selected from a hydrocarbon-based solvent, an ester-based solvent, a ketone-based solvent, and an ether-based solvent (hereinafter referred to as "component (C)"). Specific examples thereof include: a hydrocarbon-based solvent such as benzene, toluene, xylene, hexane, heptane, cyclohexane, a mineral oil, or petroleum ether; a ketone-based solvent such as acetone, methyl ethyl ketone, methyl isobutyl ketone, methyl hexyl ketone, or diisobutyl ketone; an ester-based solvent such as methyl acetate, ethyl acetate, or butyl acetate; an ether-based solvent such as methoxybutanol, ethoxybutanol, propoxybutanol, ethylene glycol dimethyl ether, ethylene glycol dibutyl ether, propylene glycol dimethyl ether, or propylene glycol dibutyl ether. Of those, the ketone-based solvent and the ester-based solvent are preferred because each of the solvents is suitable for a modification reaction and improves the stability of the silica composition.

Although the amount of such solvent with respect to the silica composition of the present invention is not limited, component (C) is blended at a content of preferably from 95 to 40 mass%, more preferably from 90 to 50 mass%, still more preferably from 80 to 60 mass% with respect to the total amount of the silica composition of the present invention containing component (C). If the content exceeds 95 mass%, the content of component (A) or component (B) in the silica composition of the present invention becomes so small that the composition needs to be added in a large amount to the resin in order that an effect such as scratch resistance may be obtained. As a result, unnecessary solvent is included in a large amount in the resin. In addition, if the content is less than 40 mass%, there are cases where the component (A) or the component (B) may not be uniformly dispersed in the resin.

Although a method of producing the silica composition of the present invention is not designated as long as compound (A) and the modified silica particles (B) are mixed with each other, the following three methods are conceivable as specific production methods in the case where the modified silica particles (B) are produced by the reaction between the raw silica particles and the modifier.
Method 1: A method involving producing the silica particles (B) through the reaction between the raw silica particles and the modifier, isolating the particles, and mixing the isolated particles with compound (A) and the solvent (C) to provide the silica composition of the present invention.
Method 2: A method involving dispersing the raw silica particles in the solvent (C), adding the modifier to the dispersion to produce the silica particles (B), and mixing the produced particles with the compound (A) to provide the silica composition of the present invention.
Method 3: A method involving mixing compound (A) and the raw silica particles in solvent (C), and adding the modifier to the mixture to modify the raw silica particles to provide the silica composition of the present invention.

Of the production methods, method 1 provides the silica composition of the present invention without any problem. However, the method requires a reaction step, an isolation step, and a mixing step. Accordingly, the method is disadvantageous in terms of time and cost, and hence not preferred as an industrial production method. In method 2, a modification reaction is performed by loading the silica particles into solvent (C). However, the silica particles may not be uniformly dispersed in solvent (C) because the particles each have strong hydrophilicity. Further, there are cases where the modification reaction may also not uniformly progress. Accordingly, method 2 is not preferred as a production method. On the other hand, in method 3, the silica particles are stably dispersed in solvent (C) by virtue of the presence of compound (A), and a subsequent modification reaction also uniformly progresses. Further, the method eliminates the need for the isolation step and the mixing step, and is hence industrially preferred. Accordingly, "method 3" is the most preferred method as a method of producing the silica composition of the present invention.

A resin composition of the present invention is a resin composition containing a reaction product of the silica composition of the present invention and a vinyl group-containing monomer. Examples of the vinyl group-containing monomer include ethylene, an allyl group-containing monomer, a styrene group-containing monomer, an acryl group-containing monomer, and a methacryl group-containing monomer. Of those, the acryl group-containing monomer and the methacryl group-containing monomer are preferred because the monomers each improve the physical properties of the resin composition. It should be noted that the term " (meth) acryl group-containing monomer" or the like in the following description refers to compounds for both the acryl group-containing monomer and the methacryl group-containing monomer.

Examples of the (meth)acryl group-containing monomer include: a monofunctional (meth)acryl group-containing monomer such as methyl (meth)acrylate, ethyl (meth)acrylate, propyl (meth)acrylate, butyl (meth)acrylate, hexyl (meth)acrylate, 2-ethylhexyl (meth)acrylate, cyclohexyl (meth)acrylate, benzyl (meth)acrylate, dimethylaminoethyl (meth)acrylate, hydroxyethyl (meth)acrylate, hydroxypropyl (meth)acrylate, glycidyl (meth)acrylate, or (meth)acrylamide; and a polyfunctional (meth)acryl group-containing monomer such as ethylene glycol di(meth)acrylate, diethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, pentaerythritol tetra(meth)acrylate, dipentaerythritol hexa(meth)acrylate, dipentaerythritol penta(meth)acrylate, dipentaerythritol tetra(meth)acrylate, ditrimethylolpropane tri(meth)acrylate, 1,1,1-tris((meth)acryloyloxyethoxyethoxy)propane, tris(hydroxyethyl)isocyanurate tri(meth)acrylate, or tris(hydroxyethyl)isocyanurate di(meth)acrylate. An oligomer obtained by polymerizing or copolymerizing one or more kinds of the (meth) acryl group-containingmonomersmayalsobe used. Of those, a resin composition using a polyfunctional (meth)acrylate-containing monomer capable of providing high hardness is preferred and a solvent-based resin composition is more preferred because the silica composition of the present invention exhibits a high effect of making even a resin using a polyfunctional (meth)acryl group-containing monomer, which is difficult to make transparent, transparent.

In addition, when the resin composition of the present invention is produced, as long as the composition contains the acryl-based monomer or the methacryl-based monomer, the incorporation of any other monomer is not rejected. Examples of the other monomer include an isocyanate-based monomer and an epoxy-based monomer. The blending amount of the other monomer, which is not limited, is preferably 50 mass% or less with respect to all the monomers.

Although the resin composition of the present invention is obtained by adding the silica composition of the present invention to the vinyl group-containing monomer, and subjecting the composition and the monomer to a polymerization reaction, the blending amount of the silica composition of the present invention at this time is not particularly specified. However, if the blending amount of the silica composition of the present invention is excessively small, scratch resistance or an effect of preventing warping may not be obtained. In addition, if the blending amount is excessively large, there are cases where an effect commensurate with the additive amount may not be obtained or a nonuniform polymer may be obtained. Accordingly, the blending amount of the silica composition of the present invention is preferably from 5 to 40 mass%, more preferably from 10 to 30 mass% with respect to the amount of all the monomers including the silica composition of the present invention.

A polymerization method for obtaining the resin composition of the present invention is not particularly specified, and any one of the known methods such as a method involving heating the monomers to polymerize the monomers, and a method involving adding a photopolymerization initiator to the monomers and subjecting the mixture to photopolymerization by photographic exposure can be employed. Of those, the method involving using the photopolymerization initiator is preferred. Examples of the photopolymerization initiator include benzoin, benzoin methyl ether, benzoin ethyl ether, benzoin isopropyl ether, benzoin n-butyl ether, benzoin phenyl ether, benzyldiphenyl disulfide, dibenzyl, diacetyl, anthraquinone, naphthoquinone, 3,3'-dimethyl-4-methoxybenzophenone, benzophenone, p,p'-bis(dimethylamino)benzophenone, 4,4'-bis(diethylamino)benzophenone, pivaloin ethyl ether, benzyl dimethyl ketal, 1,1-dichloroacetophenone, p-t-butyldichloroacetophenone, 2-chlorothioxanthone, 2-methylthioxanthone, 2,4-diethylthioxanthone, 2,2-diethoxyacetophenone, 2,2-dimethoxy-2-phenylacetophenone, 2,2-dichloro-4-phenoxyacetophenone, phenyl glyoxylate, α-hydroxyisobutyrophenone, dibenzosuberone, 1-(4-isopropylphenyl)-2-hydroxy-2-methyl-1-propanone, 2-methyl-(4-(methylthio)phenyl)-2-morpholino-1-propanone, tribromophenyl sulfone, and tribromomethyl phenyl sulfone. The additive amount of such photopolymerization initiator is preferably from 0.1 to 10 mass%, more preferably from 0.2 to 6 mass% with respect to all the monomer components including the silica composition of the present invention.

The addition of a known additive that can be added to a resin as well as the respective components to the resin composition of the present invention is not denied, and a known additive such as a polymerization inhibitor, a solvent, a plasticizer, a colorant, a surface tension modifier, a stabilizer, a defoaming agent, an adhesiveness-imparting agent, or a flame retardant can be blended in the composition as required to the extent that the effect of the present invention is not impaired.

Although the applications of the resin composition of the present invention are not specified, the composition can be suitably used in coating applications such as architectural paint, automotive paint, paint for a steel plate, glass coatings , and thin film coatings because the composition improves the scratch resistance of a resin and has high transparency. Further, when the composition is applied to a thin film, the warping of the thin film after the coating is small. Accordingly, the composition is more preferably used in a thin film coating application.

### Examples

The present invention is hereinafter specifically described by way of Examples. It should be noted that the term "%" in Examples and the like means "mass%" unless otherwise stated.

### (Samples used)

A-1: In the general formula (1), R¹ and R² each represent an ethyl group, R³ represents a methyl group, R⁴ represents a polyether group represented by the general formula (2), where R⁵ represents a propylene group, m represents 10, and X represents a chlorine atom. B-1 (trade name: KBM-5103, manufactured by Shin-Etsu Chemical Co., Ltd.): 3-acryloxypropyltrimethoxysilane (In the general formula (4), R⁸ to R¹⁰ each represent a methoxy group, R¹¹ represents a propylene group, and R¹² represents a hydrogen atom.)
B-2 (Karenz MOI, manufactured by Showa Denko K.K.): methacryloxyethyl isocyanate (In the general formula (3), R⁷ represents an ethylene group, and R⁶ represents a methyl group.) B-3 (QDM, manufactured by MRC UNITEC Co., Ltd): methacryloxyethyltrimethylammonium chloride (In the general formula (5), R¹³ to R¹⁵ each represent a methyl group, R¹⁶ represents an ethylene group, R¹⁷ represents a methyl group, A represents an oxygen atom, and X represents a chlorine atom.)

### (Production of product 1 of present invention)

105 Grams of butyl acetate and 11.7 g of Component A-1 were loaded into a four-necked flask having a volume of 500 ml equipped with a Dean-Stark apparatus, a temperature gauge, a nitrogen-introducing tube, and a stirring machine. After the air in the flask had been replaced with nitrogen, the temperature in the system was increased to between 90 and 100°C while the mixture was stirred, followed by the dropping of 166.7 g of ADELITE AT-20Q (manufactured by ADEKA CORPORATION, aqueous solution containing 20 mass% of colloidal silica) to the system over 6 hours. Even after completion of the dropping, the temperature was maintained, evaporating butyl acetate and water were trapped with the Dean-Stark apparatus, butyl acetate was returned to the system, and water was removed. The foregoing operation was continued for 1 hour and the temperature in the system was increased to between 110 and 120°C, followed by aging for 1 hour. The resultant solution was a uniform opaque solution (hereinafter referred to as "Dispersion solution 1") and moisture content in the system was 0.4 mass%.

50 Grams of Dispersion solution 1 obtained by the foregoing operations, 0.5 g of triethylamine as a catalyst, and 4.7 g of Compound B-1 were loaded into a four-necked flask having a volume of 100 ml equipped with a temperature gauge, a nitrogen-introducing tube, and a stirring machine. After the air in the flask had been replaced with nitrogen, the temperature of the mixture was increased to 70°C while the mixture was stirred. The mixture was subjected to a reaction at the temperature for 6 hours. Thus, an acryl-modified silica composition as Product 1 of the present invention was obtained.

### (Production of Product 2 of present invention)

50 Grams of Dispersion solution 1 obtained by the production of Product 1 of the present invention and 5.2 g of Compound B-2 were loaded into a four-necked flask having a volume of 100 ml equipped with a temperature gauge, a nitrogen-introducing tube, and a stirring machine. After the air in the flask had been replaced with nitrogen, the temperature of the mixture was increased to 80°C while the mixture was stirred. The mixture was subjected to a reaction at the temperature for 6 hours. Thus, a methacryl-modified silica composition as Product 2 of the present invention was obtained.

### (Production of Product 3 of present invention)

105 Grams of butyl acetate and 11.7 g of Component A-1 were loaded into a four-necked flask having a volume of 500 ml equipped with a Dean-Stark apparatus, a temperature gauge, a nitrogen-introducing tube, and a stirring machine. After the air in the flask had been replaced with nitrogen, the temperature in the system was increased to between 90 and 100°C while the mixture was stirred, followed by the dropping of a mixed solution of 166.7 g of ADELITE AT-20Q and 6.3 g of Compound B-3 to the system over 6 hours. Even after completion of the dropping, the temperature was maintained, evaporating butyl acetate and water were trapped with the Dean-Stark apparatus, butyl acetate was returned to the system, and water was removed. The foregoing operation was continued for 1 hour and the temperature in the system was increased to between 110 and 120°C, followed by aging for 1 hour. Thus, a methacryl-modified silica composition as Product 3 of the present invention was obtained.

### (Production of Comparative product 1)

50 Grams of Dispersion solution 1 obtained by the production of Product 1 of the present invention and 5.5 g of dimethyldimethoxysilane were loaded into a four-necked flask having a volume of 100 ml equipped with a temperature gauge, a nitrogen-introducing tube, and a stirring machine. After the air in the flask had been replaced with nitrogen, the temperature of the mixture was increased to 80°C while the mixture was stirred. The mixture was subjected to a reaction at the temperature for 6 hours. Thus, a methyl-modified silica composition as Comparative product 1 was obtained.

### (Production of Comparative product 2)

105 Grams of butyl acetate were loaded into a four-necked flask having a volume of 500 ml equipped with a Dean-Stark apparatus, a temperature gauge, a nitrogen-introducing tube, and a stirring machine. After the air in the flask had been replaced with nitrogen, the temperature in the system was increased to between 90 and 100°C while stirring was performed, followed by the dropping of a mixed solution of 166.7 g of ADELITE AT-20Q and 18 g of Compound B-3 to the system over 6 hours. Even after completion of the dropping, the temperature was maintained, evaporating butyl acetate and water were trapped with the Dean-Stark apparatus, butyl acetate was returned to the system, and water was removed. The foregoing operation was continued for 1 hour and the temperature in the system was increased to between 110 and 120°C, followed by aging for 1 hour. Thus, a methacryl-modified silica composition as Comparative product 2 was obtained.

### (Production of Comparative product 3)

105 Grams of butyl acetate were loaded into a four-necked flask having a volume of 500 ml equipped with a Dean-Stark apparatus, a temperature gauge, a nitrogen-introducing tube, and a stirring machine. After the air in the flask had been replaced with nitrogen, the temperature in the system was increased to between 90 and 100°C while stirring was performed, followed by the dropping of a mixed solutionof 166.7 g of ADELITE AT-20Q, 4 gof dimethyldimethoxysilane, and 13 g of Compound B-1 to the system over 6 hours. Even after the completion of the dropping, the temperature was maintained, evaporating butyl acetate and water were trapped with the Dean-Stark apparatus, butyl acetate was returned to the system, and water was removed. The foregoing operation was continued for 1 hour and the temperature in the system was increased to between 110 and 120°C, followed by aging for 1 hour. Thus, an acryl-modified silica composition as Comparative product 3 was obtained.

### (Production of Comparative product 4)

105 Grams of butyl acetate and 11.7 g of tetramethylammonium chloride were loaded into a four-necked flask having a volume of 500 ml equipped with a Dean-Stark apparatus, a temperature gauge, a nitrogen-introducing tube, and a stirring machine. After the air in the flask had been replaced with nitrogen, the temperature in the system was increased to between 90 and 100°C while the mixture was stirred, followed by the dropping of 166.7 g of ADELITE AT-20Q to the system over 6 hours. Even after completion of the dropping, the temperature was maintained, evaporating butyl acetate and water were trapped with the Dean-Stark apparatus, butyl acetate was returned to the system, and water was removed. The foregoing operation was continued for 1 hour and the temperature in the system was increased to between 110 and 120°C, followed by aging for 1 hour. The resultant solution was a uniform opaque solution (hereinafter referred to as "Dispersion solution 2") and moisture content in the system was 0.3 mass%.

50 Grams of Dispersion solution 2 obtained by the foregoing operations, 0.5 g of triethylamine as a catalyst, and 4 . 7 g of Compound B-1 were loaded into a four-necked flask having a volume of 100 ml equipped with a temperature gauge, a nitrogen-introducing tube, and a stirring machine. After the air in the flask had been replaced with nitrogen, the temperature of the mixture was increased to 70°C while the mixture was stirred. The mixture was subjected to a reaction at the temperature for 6 hours. Thus, an acryl-modified silica composition as Comparative product 4 was obtained.

### (Comparative product 5)

Dispersion solution 1 was defined as Comparative product 5.

Methods of producing an application liquid and test piece used in each test, and various test methods are described below. It should be noted that Table 1 summarizes the results of the tests.

### <Film production procedure>

3.71 Grams of dipentaerythritol hexaacrylate (DPHA) and 3.50 gof the silica composition dispersion were mixed to prepare a solution α. Next, 0.25 g of a photoradical polymerization initiator 1-hydroxycyclohexyl phenyl ketone and 0.015 g of BYK-375 as a surface conditioner were added to 2.5 g of butyl acetate to prepare Solution β. 3.22 Grams of butyl acetate, 7.21 g of Solution α, and 2.77 g of Solution β were mixed to prepare Application liquid A. Application liquid A was applied onto COSMOSHINE A4100 (manufactured by Toyo Boseki) as a filmmade of a resin with abar coater RDS#14 (manufactured by Imoto Machinery Co., Ltd.), and was dried in a thermostat chamber having a temperature of 80°C for 1 minute. After the drying, the coating film was optically cured by being irradiated with UV light having an energy of 300 mJ emitted from an exposure unit (manufactured by Fusion UV Systems, INC.). Thus, a film for evaluation was prepared. The thickness of the prepared film was measured with a digital thickness meter (manufactured by Mitutoyo Corporation). Thus, it was confirmed that the thickness was between 6.5 µm and 7.5 µm.

### <Transparency test>

A square piece measuring 10 cm by 10 cm was cut out of the prepared film for evaluation, and its turbidity (haze) was measured with Haze Meter NDH2000 (manufactured by NIPPON DENSHOKU INDUSTRIES CO., LTD.) as a haze meter. When the haze of the film is lower, i.e., its turbidity is lower, it can be judged that the transparency of the film is higher, and hence it can be judged that the film is better.

### <Scratch resistance test>

Steel wool was attached to the moving portion of Variable Load Friction and Wear Tester HHS-2000 (manufactured by Shinto Science Co.), a test plate was rubbed with the steel wool in accordance with the following test conditions, and a difference (ΔL) in L value (lightness) was calculated by measuring L values before and after a test with a color-difference meter (CM-3700d: manufactured by KONICA MINOLTA, INC.) . The test plate before the test has a black appearance through a transparent coating film. However, when the coating film is flawed, the coating film whitens and hence the difference in L value arises. When the difference in L value is smaller, it can be judged that the coating film has better scratch resistance. It should be noted that the L value before the test was 5.21.

**(Test conditions)**

| | |
|---|---|
| Load: | 1,000 g |
| Speed: | 10 mm/sec |
| Operation width: | 40 mm |
| Number of reciprocations: | 20 times |

### <Warping test>

The film cut into a square piece measuring 10 cm by 10 cm is placed on a smooth plate so that its surface having prepared thereon the coating film may be on an upper side, and one half of the film measuring 5 cm by 10 cm is pressed with a glass plate. The height of the warping of a corner on the side not pressed with the plate is measured with a ruler. When the value is smaller, it can be judged that the warping is smaller and hence the coating film is better.

### [Table 1]

**Table 1 (Test result)**

| | Product of present invention | | | Comparative product | | | | | Blank |
|---|---|---|---|---|---|---|---|---|---|
| | 1 | 2 | 3 | 1 | 2 | 3 | 4 | 5 | |
| Transparency test (Haze) | 0.17 | 0.12 | 0.15 | 1.02 | 0.18 | 1.22 | 1.32 | 1.63 | 0.20 |
| Scratch resistance test (ΔL value) | 2.10 | 2.29 | 2.05 | 3.22 | 2.30 | 4.39 | 3.93 | 4.05 | 4.12 |
| Warping test (mm) | 9 | 8 | 8 | 18 | 22 | 9 | 16 | 9 | 29.5 |

## Claims

1. A silica composition, comprising:
compound (A) represented by the following general formula (1) ; and
acryl- or methacryl-modified silica particles (B): 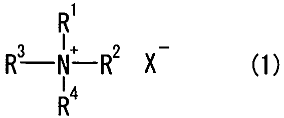 where X⁻ represents a halogen ion or a methyl sulfate ion, R¹ to R⁴ each independently represent a hydrocarbon group having 1 to 36 carbon atoms, a hydrocarbon group having 1 to 36 carbon atoms that has any one or more kinds of substituents selected from an ester group, an amide group, and a hydroxyl group, or a polyether group represented by the following general formula (2), provided that at least one of R¹ to R⁴ needs to represent a polyether group represented by the following general formula (2): 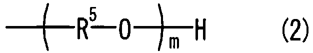 where m represents a number of from 1 to 100 and R⁵ represents an alkylene group having 2 to 4 carbon atoms, and
wherein compound (A) is contained in an amount of from 2 to 10 parts by mass with respect to 10 parts by mass of raw silica particles.

2. A silica composition according to claim 1, wherein R¹ to R³ in the general formula (1) each independently represent an alkyl group having 1 to 4 carbon atoms, and R⁴ in the general formula (1) represents a group represented by the general formula (2).

3. A silica composition according to claim 1 or 2, wherein the silica particles of the acryl- or methacryl-modified silica particles (B) are modified with any one or more of modifiers represented by the following general formulae (3) to (5): 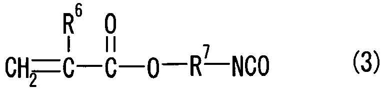 where R⁶ represents a hydrogen atom or a methyl group and R⁷ represents an alkylene group having 1 to 6 carbon atoms; 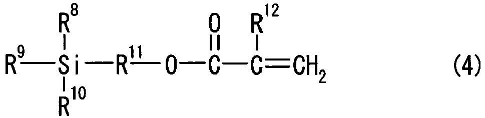 where R⁸ to R¹⁰ each represent a group selected from the group consisting of an alkyl group having 1 to 4 carbon atoms, an oxyalkyl group having 1 to 4 carbon atoms, and a chlorine atom, R¹¹ represents an alkylene group having 1 to 6 carbon atoms, and R¹² represents a hydrogen atom or a methyl group, provided that any one or more of R⁸ to R¹⁰ each need to represent an oxyalkyl group having 1 to 4 carbon atoms or a chlorine atom; 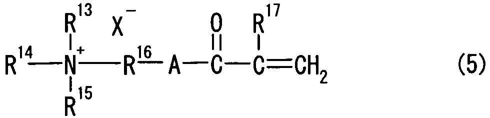 where R¹³ to R¹⁵ each represent an alkyl group having 1 to 4 carbon atoms, R¹⁶ represents an alkylene group having 1 to 6 carbon atoms, R¹⁷ represents a hydrogen atom or a methyl group, A represents an oxygen atom or -NH-, and X represents a halogen atom or a methyl sulfate derivative.

4. A silica composition according to claim 3, wherein, with respect to 10 parts by mass of raw silica particles, the modifier of claim 3 is used in an amount of from 0.1 to 15 parts by mass.

5. A silica composition according to claim 1 or 2, further comprising, as component (C), any one or more kinds of solvents selected from hydrocarbon-, ester-, ketone-, and ether-based solvents.

6. A silica composition according to claim 3, further comprising, as component (C), any one or more kinds of solvents selected from hydrocarbon-, ester-, ketone-, and ether-based solvents.

7. A resin composition, comprising a reaction product of a polymerization reaction of the silica composition according to claim 1 or 2 and a vinyl group-containing monomer.

8. A resin composition according to claim 7, wherein the vinyl group-containing monomer comprises a (meth)acryl group-containing monomer.

9. Use of a resin composition according to claim 7 or 8 as an automotive paint.

## Patentansprüche

1. Silicazusammensetzung, umfassend:
eine Verbindung (A), die durch die folgende allgemeine Formel (1) repräsentiert ist;
und
Acryl- oder methacrylmodifizierte Silicapartikel (B): 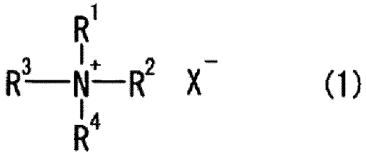 wobei X⁻ ein Halogenion oder Methylsulfation repräsentiert, R¹ bis R⁴ jeweils unabhängig eine Kohlenwasserstoffgruppe, die 1 bis 36 Kohlenstoffatome aufweist, eine Kohlenwasserstoffgruppe, die 1 bis 36 Kohlenstoffatome aufweist und die irgendeine oder mehrere Arten von Substituenten, ausgewählt aus einer Estergruppe, einer Amidgruppe und einer Hydroxylgruppe, aufweist, oder eine Polyethergruppe, die durch die folgende allgemeine Formel (2) repräsentiert ist, repräsentieren, unter der Voraussetzung, dass mindestens einer von R¹ bis R⁴ eine Polyethergruppe repräsentieren muss, welche durch die folgende allgemeine Formel (2) repräsentiert ist: 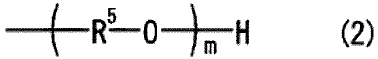 wobei m eine Zahl von 1 bis 100 und R⁵ eine Alkylengruppe, die 2 bis 4 Kohlenstoffatome aufweist, repräsentiert, und
wobei die Verbindung (A) mit einer Menge von 2 bis 10 Massenanteilen in Bezug auf 10 Massenanteile der Silicaausgangspartikel enthalten ist.

2. Silicazusammensetzung nach Anspruch 1, wobei R¹ bis R³ in der allgemeinen Formel (1) jeweils unabhängig eine Alkylgruppe, die 1 bis 4 Kohlenstoffatome aufweist, repräsentiert und R⁴ in der allgemeinen Formel (1) eine Gruppe repräsentiert, die durch die allgemeine Formel (2) repräsentiert ist.

3. Silicazusammensetzung nach Anspruch 1 oder 2, wobei die Silicapartikel aus dem acryl- oder methacrylmodifizierten Silicapartikeln (B) mit ein oder mehreren Modifikatoren modifiziert sind, die durch die folgenden allgemeinen Formeln (3) bis (5) repräsentiert sind: 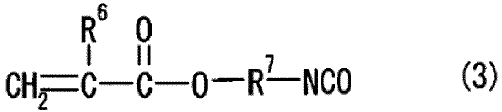 wobei R⁶ ein Wasserstoffatom oder eine Methylgruppe repräsentiert und R⁷ eine Alkylengruppe, die 1 bis 6 Kohlenstoffatome aufweist, repräsentiert; 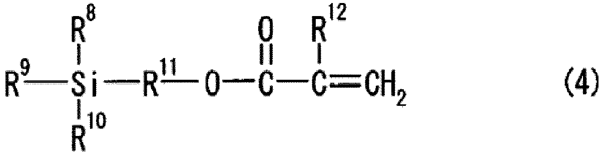 wobei R⁸ bis R¹⁰ jeweils eine Gruppe repräsentieren, die aus der Gruppe ausgewählt ist, bestehend aus einer Alkylgruppe, die 1 bis 4 Kohlenstoffatome aufweist, einer Oxyalkylgruppe, die 1 bis 4 Kohlenstoffatome aufweist, und einem Chloratom, R¹¹ eine Alkylengruppe, die 1 bis 6 Kohlen-stoffatome aufweist, repräsentiert und R¹² ein Wasserstoffatom oder eine Methylgruppe repräsentiert, unter der Voraussetzung, dass irgendeiner oder mehrere von R⁸ bis R¹⁰ jeweils eine Oxyalkylgruppe, die 1 bis 4 Kohlenstoff-atome aufweist, oder ein Chloratom repräsentieren müssen; 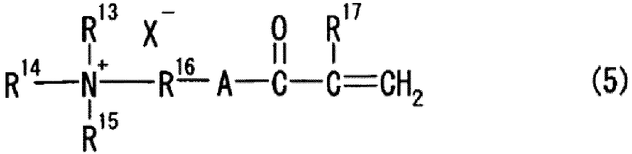 wobei R¹³ bis R¹⁵ jeweils eine Alkylgruppe, die 1 bis 4 Kohlenstoffatome aufweist, repräsentiert, R¹⁶ eine Alkylengruppe, die 1 bis 6 Kohlenstoffatome aufweist, repräsentiert, R¹⁷ ein Wasserstoffatom oder eine Methylgruppe repräsentiert, A ein Sauerstoffatom oder -NH- repräsentiert und X ein Halogenatom oder ein Methylsulfatderivat repräsentiert.

4. Silicazusammensetzung nach Anspruch 3, wobei in Bezug auf 10 Massenanteile der Silicaausgangspartikel der Modifikator nach Anspruch 3 mit einer Menge von 0,1 bis 15 Massenanteilen verwendet wird.

5. Silicazusammensetzung nach Anspruch 1 oder 2, ferner umfassend als Komponente (C) irgendeine oder mehrere Arten von Lösungsmitteln, ausgewählt aus Kohlenwasserstoff-, Ester-, Ketonlösungsmitteln und Lösungsmitteln auf Etherbasis.

6. Silicazusammensetzung nach Anspruch 3, ferner umfassend als Komponente (C) irgendeine oder mehrere Arten von Lösungsmitteln, ausgewählt aus Kohlenwasserstoff-, Ester-, Ketonlösungsmitteln und Lösungsmitteln auf Etherbasis.

7. Harzzusammensetzung, umfassend ein Reaktionsprodukt aus einer Polymerisationsreaktion von der Silicazusammensetzung nach Anspruch 1 oder 2 und einem vinylgruppenhaltigen Monomer.

8. Harzzusammensetzung nach Anspruch 7, wobei das vinylgruppenhaltige Monomer ein (meth)acrylgruppenhaltiges Monomer umfasst.

9. Verwendung von einer Harzzusammensetzung nach Anspruch 7 oder 8 als Autolack.

## Revendications

1. Composition de silice, comprenant :
un composé (A) représenté par la formule générale (1) suivante ; et
des particules (B) de silice à modification acrylique ou méthacrylique : 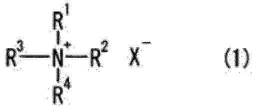 dans lesquelles X⁻ représente un ion halogène ou un ion sulfate de méthyle, R¹ à R⁴ représentent chacun indépendamment un groupe hydrocarboné ayant de 1 à 36 atomes de carbone, un groupe hydrocarboné ayant de 1 à 36 atomes de carbone qui possède un ou plusieurs types de substituants choisis parmi un groupe ester, un groupe amide et un groupe hydroxyle, ou un groupe polyéther représenté par la formule générale (2) suivante, à condition qu'au moins un de R¹ à R⁴ représente un groupe polyéther représenté par la formule générale (2) suivante : 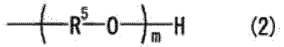 dans laquelle m représente un nombre de 1 à 100 et R⁵ représente un groupe alkylène ayant de 2 à 4 atomes de carbone, et
dans laquelle le composé (A) est contenu en une quantité de 2 à 10 parties en masse par rapport à 10 parties en masse des particules de silice brutes.

2. Composition de silice selon la revendication 1, dans laquelle R¹ à R³ dans la formule générale (1) représentent chacun indépendamment un groupe alkyle ayant de 1 à 4 atomes de carbone et R⁴ dans la formule générale (1) représente un groupe représenté par la formule générale (2).

3. Composition de silice selon la revendication 1 ou 2, dans laquelle les particules de silice des particules (B) de silice à modification acrylique ou méthacrylique sont modifiées par un ou plusieurs modificateurs représentés par les formules générales (3) à (5) suivantes : 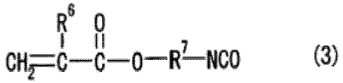 dans laquelle R⁶ représente un atome d'hydrogène ou un groupe méthyle et R⁷ représente un groupe alkylène ayant de 1 à 6 atomes de carbone ; 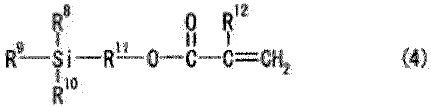 dans laquelle R⁸ à R¹⁰ représentent chacun un groupe choisi dans les groupes constitués par un groupe alkyle ayant de 1 à 4 atomes de carbone, un groupe oxyalkyle ayant de 1 à 4 atomes de carbone et un atome de chlore, R¹¹ représente un groupe alkylène ayant de 1 à 6 atomes de carbone et R¹² représente un atome d'hydrogène ou un groupe méthyle, à condition qu'un quelconque ou plusieurs de R⁸ à R¹⁰ représentent un groupe oxyalkyle ayant de 1 à 4 atomes de carbone ou un atome de chlore ; 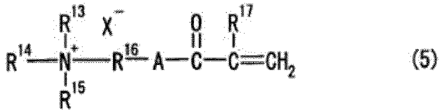 dans laquelle chacun de R¹³ à R¹⁵ représente un groupe alkyle ayant de 1 à 4 atomes de carbone, R¹⁶ représente un groupe alkylène ayant de 1 à 6 atomes de carbone, R¹⁷ représente un atome d'hydrogène ou un groupe méthyle, A représente un atome d'oxygène ou -NH- et X représente un atome d'halogène ou un dérivé de sulfate de méthyle.

4. Composition de silice selon la revendication 3, dans laquelle, par rapport à 10 parties en masse de particules de silice brutes, le modificateur selon la revendication 3 est utilisé en une quantité de 0,1 à 15 parties en masse.

5. Composition de silice selon la revendication 1 ou 2, comprenant en outre, en tant que composant (C), un quelconque ou plusieurs types de solvants choisis parmi les solvants à base d'hydrocarbures, d'esters, de cétones et d'éthers.

6. Composition de silice selon la revendication 3, comprenant en outre, en tant que composant (C), un quelconque ou plusieurs types de solvants choisis parmi les solvants à base d'hydrocarbures, d'esters, de cétones et d'éthers.

7. Composition de résine comprenant un produit réaction d'une réaction de polymérisation de la composition de silice selon la revendication 1 ou 2 et un monomère contenant un groupe vinylique.

8. Composition de résine selon la revendication 7, dans laquelle le monomère contenant un groupe vinylique comprend un monomère contenant un groupe (méth)acrylique.

9. Utilisation d'une composition de résine selon la revendication 7 ou 8 en tant que peinture pour automobile.
